# FASCICULE DE BREVET EUROPEEN

(11) **EP 4 213 413 B1**
(45) Date de publication et mention de la délivrance du brevet: **07.08.2024**
(21) Numéro de dépôt: 23150160.2
(22) Date de dépôt: 03.01.2023
(51) Int. Cl.: H04B 10/116, H04B 10/69

(54) **DISPOSITIF RÉCEPTEUR, SYSTÈME, PROCÉDÉ DE RÉCEPTION ET MÉTHODE DE COMMUNICATION PAR SIGNAL DE LUMIÈRE**
EMPFANGSVORRICHTUNG, SYSTEM, EMPFANGSVERFAHREN UND LICHTSIGNALKOMMUNIKATIONSVERFAHREN
RECEIVING DEVICE, SYSTEM, RECEIVING METHOD AND LIGHT SIGNAL COMMUNICATION METHOD

(30) Priorité: 13.01.2022 FR 2200265
(43) Date de publication de la demande: 19.07.2023
(73) Titulaire: STMICROELECTRONICS (GRENOBLE 2) SAS, 38000 Grenoble (FR); STMicroelectronics (ALPS) SAS, 38000 Grenoble (FR)
(72) Inventeur: MOENECLAEY, Nicolas, 38210 VOUREY (FR); MICHAL, Vratislav, 38120 FONTANIL-CORNILLON (FR); PATRY, Jean-Luc, 38920 CROLLES (FR)
(74) Mandataire: Casalonga

(56) Documents cités:
- EP-A1- 3 350 945
- QUADIR NASIR A ET AL: "An Active Inductor Based TIA with Ambient Light Rejection for VLC Applications", 2021 IEEE INTERNATIONAL MIDWEST SYMPOSIUM ON CIRCUITS AND SYSTEMS (MWSCAS), IEEE, 9 August 2021 (2021-08-09), pages 882 - 885, XP033972210, DOI: 10.1109/MWSCAS47672.2021.9531926
- AHMED MOAAZ ET AL: "A CMOS Transimpedence Amplifier With Ambient Light Rejection for Visible Light Communication in Intelligent Transport Systems", 2019 15TH INTERNATIONAL WIRELESS COMMUNICATIONS & MOBILE COMPUTING CONFERENCE (IWCMC), IEEE, 24 June 2019 (2019-06-24), pages 7 - 13, XP033578156, DOI: 10.1109/IWCMC.2019.8766535
- ADIONO TRIO ET AL: "A Circuit for Robust Visible Light Communication Systems in Indoor Environment", 2018 10TH INTERNATIONAL CONFERENCE ON INFORMATION TECHNOLOGY AND ELECTRICAL ENGINEERING (ICITEE), IEEE, 24 July 2018 (2018-07-24), pages 1 - 5, XP033446513, DOI: 10.1109/ICITEED.2018.8534829

## Description

Des modes de réalisation et de mise en oeuvre concernent la communication par signal de lumière.

La communication par signal de lumière est une technique de communication de données, utilisant une modulation d'un signal de signal de lumière, par exemple un signal de lumière visible ou infrarouge, généré par un émetteur et reçu par un récepteur.

Lors d'une communication par signal de lumière, la distance entre l'émetteur et le récepteur peut changer, et la luminosité ambiante du milieu dans lequel est faite la communication peut changer elle aussi. Le récepteur doit typiquement être capable de s'adapter à ces changements.

Cela étant, il est admis que ces potentielles changements du signal de lumière reçu par le récepteur ont une vitesse de variation négligeable par rapport à la fréquence du signal. Par conséquents, les récepteurs de communication par signal de lumière classiques utilisent typiquement une technique de filtrage adaptée pour se stabiliser sur le niveau moyen du signal reçu, usuellement nommée par sa désignation anglosaxonne « AC coupling ». Cette technique permet ainsi de positionner un seuil de détection des informations reçues entre un niveau constant de lumière reçue et un niveau haut du signal, afin de s'adapter à la fois à l'intensité de la luminosité ambiante et à l'amplitude du signal de la communication par signal de lumière (relative à la distance émetteur-récepteur).

La technique de filtrage « AC coupling » fonctionne convenablement pour une communication d'un flux continu de données de niveaux alternativement haut et bas, et établi depuis une durée non-négligeable supérieure au temps de réponse du filtre pour se stabiliser.

Or, certaines techniques de communications nécessitent une aptitude à détecter le premier bit reçu après un silence de la communication.

Par ailleurs, comme il n'y a pas de signal d'horloge partagé entre l'émetteur et le récepteur, un codage est typiquement employé pour la communication, par exemple un codage du type Manchester.

Ce type de codage des données, classique et bien connu de l'homme de l'art, permet de distinguer les données successivement communiquées entre deux éléments non-synchronisés, mais présente l'inconvénient d'utiliser plusieurs bits pour coder une donnée (dans le code Manchester, deux niveaux successifs dans le signal sont utilisés pour coder une seule donnée binaire), ce qui réduit le débit de la communication en matière de quantité de données.

La publication scientifique de l'état de l'art "An Active Inductor Based TIA with Ambient Light Rejection for VLC Applications, QUADIR NASIR A ET AL" décrit une méthode de réjection de la lumière ambiante par l'utilisation de boucle à rétro effet, qui mesure la différence de tension entre deux pré-amplificateurs pour décaler la tension de sortie. D'autres publications de l'état de l'état de l'art "A CMOS Transimpedence Amplifier With Ambient Light Rejection for Visible Light Communication in Intelligent Transport Systems, AHMED MOAAZ ET AL", "A Circuit for Robust Visible Light Communication Systems in Indoor Environment, ADIONO TRIO ET AL" divulguent respectivement l'utilisation de filtres et de boucle à rétro-effet utilisant la mesure de la composante continue en sortie du pré-amplificateur.

Ainsi, il existe un besoin de remédier aux inconvénients mentionnés ci-avant, c'est-à-dire de proposer une technique de communication par signal de lumière capable de s'adapter aux changements dans le milieu de la communication (luminosité ambiante, distance émetteur-récepteur), capable de détecter un premier bit reçu après un silence de la communication, et performante en matière de débit de données.

Selon un aspect, il est proposé un dispositif récepteur de communication par signal de lumière comportant une diode photoréceptrice configurée pour générer un signal de courant sur un premier noeud à partir d'un signal de lumière reçu, un préamplificateur configuré pour convertir le signal de courant sur le premier noeud en un signal de tension sur un deuxième noeud, et un amplificateur différentiel comportant une première entrée connectée au premier noeud et une deuxième entrée connectée à un troisième noeud couplé au deuxième noeud par l'intermédiaire d'un circuit d'ajustement configuré pour décaler le niveau du signal de tension du deuxième noeud, sur le troisième noeud, de manière commandée par un signal de commande.

Ainsi, contrairement aux techniques classiques utilisant un filtrage de la composante continue du signal reçu comme tension de référence sur une première entrée d'un étage différentiel, le dispositif selon aspect utilise la tension de la diode photoréceptrice, typiquement très stable à la tension de seuil de la diode, et présente sur le premier noeud, en tant que référence sur la première entrée de l'amplificateur différentiel.

Par conséquent, l'amplificateur différentiel est immédiatement réactif en cas de réception d'un signal lumineux, retransmis sur le troisième noeud par le préamplificateur et le circuit d'ajustement, et n'a notamment pas besoin d'un délai de stabilisation pour le temps de réponse des filtres classiques.

Selon un mode de réalisation, le préamplificateur comporte un transistor ayant une borne de commande couplée au premier noeud et une borne de conduction couplée au deuxième noeud, un élément résistif couplé entre le premier noeud et le deuxième noeud, et un circuit générateur de courant configuré pour générer un courant de polarisation sur le deuxième noeud.

En d'autres termes, le préamplificateur peut être réalisé selon un montage simplifié du type amplificateur transimpédance résistif.

Selon un mode de réalisation, le circuit d'ajustement comporte un élément résistif couplé entre le deuxième noeud et le troisième noeud et un circuit générateur de courant configuré pour générer un courant d'ajustement sur le troisième noeud, à une intensité commandée par le signal de commande.

Par exemple, le circuit générateur de courant peut être du type convertisseur numérique-analogique à sortie en courant, permettant notamment une grande précision sur l'intensité du courant généré à partir d'une commande ayant une valeur numérique codée en binaire.

Selon un mode de réalisation, le dispositif comporte en outre un circuit de commande configuré pour générer le signal de commande en fonction d'un signal de sortie de l'amplificateur différentiel de manière à décaler le niveau du signal de tension du deuxième noeud sur le troisième noeud à un niveau centré sur le niveau de tension de la diode photoréceptrice sur le premier noeud.

Par niveau « centré » sur le niveau de tension de la diode, on entend que la moyenne entre un niveau haut du signal de tension et un niveau bas du signal de tension est sensiblement égale au niveau de tension de la diode. A cet égard, on pourra mettre à zéro la différence entre les deux entrées de l'amplificateur différentiel et décaler d'une valeur correspondant à la moitié de l'amplitude du signal de tension, et de façon préférentielle et avantageuse, avec la calibration selon le mode de réalisation définit ci-dessous.

Selon un mode de réalisation, le circuit de commande, afin de décaler le niveau du signal de sur le troisième noeud à un niveau centré sur le niveau de tension de la diode photoréceptrice, est configuré pour effectuer une calibration comprenant une première étape, destinée à des premières conditions de lumière ambiante, comprenant une identification d'une première valeur du signal de commande permettant de décaler le niveau du signal de tension sur le troisième noeud au même niveau que la tension sur le premier noeud de la diode photoréceptrice, et une deuxième étape, destinée à des deuxièmes conditions de lumière ambiante, comprenant une identification d'une deuxième valeur du signal de commande permettant de décaler le niveau du signal de tension sur le troisième noeud au même niveau que la tension sur le premier noeud de la diode photoréceptrice.

Cela permet d'obtenir, par exemple au moyen de techniques d'auto-zéro accédant séquentiellement et de plus en plus finement à une différence nulle entre les entrées de l'amplificateur différentiel, le niveau bas du signal de tension de la communication par signal de lumière (première étape) et le niveau haut du signal de tension de la communication par signal de lumière (deuxième étape).

Selon un mode de réalisation, la calibration comprend l'établissement d'une valeur calibrée du signal de commande égale à la première valeur additionnée de la moitié de la différence entre la première valeur et la deuxième valeur.

Selon un mode de réalisation, le dispositif récepteur comporte en outre un étage de sortie configuré pour fournir un signal de sortie carré à partir de sorties de l'amplificateur différentiel, un circuit oscillateur configuré pour générer une pluralité de phases d'un signal d'horloge ayant des cycles d'horloge, et un étage de récupération de signal configuré pour détecter dans le signal de sortie un indicateur de début de paquet de bits, identifier l'une desdites phases dont le cycle d'horloge commence au plus près de l'indicateur de début de paquet de bits, et délimiter, dans le signal de sortie, des bits d'un paquets de bits sur les cycles d'horloge du signal d'horloge à la phase identifiée.

Cela permet avantageusement d'obtenir une référence temporelle interne, sur la phase identifiée, pour délimiter la largeur de chaque bit transmis par paquet lors de la communication par signal de lumière. Même si le signal d'horloge interne du récepteur est légèrement différent en fréquence du signal d'horloge ayant cadencé la génération du signal de lumière, les bits pourront être délimités de façon fidèle à leur cadencement d'origine du fait de l'identification de la phase alignée sur l'indicateur de début de paquet de bits.

Par conséquent, ce mode de réalisation permet de s'abstenir d'un codage, du type Manchester, destiné à l'identification des données, de façon avantageuse en matière de débit des données.

Selon un autre aspect, il est proposé un système de communication par signal de lumière comportant un dispositif récepteur tel que défini ci-avant, et un dispositif émetteur comprenant une diode photoémettrice configurée pour générer le signal de lumière véhiculant des paquets de bits, les paquets de bits successifs étant séparés dans le temps d'une durée au moins égale à la durée d'un paquet de bits.

En effet, le dispositif récepteur tel que défini ci-avant permet avantageusement un type de communication dans lequel des paquets de bits successifs sont communiqués avec un écart temporel important, et sans partage d'un signal d'horloge commun entre l'émetteur et le dispositif récepteur.

Selon un mode de réalisation, le dispositif récepteur et le dispositif émetteur collaborent dans la calibration de sorte que le dispositif émetteur ne génère pas le signal de lumière dans la première étape, les premières conditions de lumière ambiante comprenant une luminosité ambiante uniquement, et de sorte que le dispositif émetteur génère le signal de lumière en continu dans la deuxième étape, les deuxièmes conditions de lumière ambiante comprenant la luminosité ambiante et la luminosité du signal émis.

Selon un mode de réalisation, le dispositif récepteur et le dispositif émetteur comportent chacun un circuit oscillateur indépendant, configurés pour générer des signaux d'horloge respectifs ayant des cycles d'horloge et réglés à la même fréquence, le dispositif émetteur étant configuré pour délimiter, sur les cycles d'horloge du signal d'horloge, la génération des bits des paquets de bits émis, le dispositif récepteur étant configuré pour délimiter, sur les cycles d'horloge du signal d'horloge, la détection des bits d'un paquets de bits reçus.

Selon un autre aspect, il est proposé un procédé de réception d'une communication par signal de lumière comprenant :
- une génération d'un signal de courant sur un premier noeud à partir d'un signal de lumière reçu, par une diode photoréceptrice,
- une préamplification convertissant le signal de courant sur le premier noeud en un signal de tension sur un deuxième noeud,
- un décalage, sur un troisième noeud du niveau du signal de tension du deuxième noeud de manière commandée par un signal de commande,
- une amplification différentielle entre la tension présente sur le premier noeud et la tension présente sur le troisième noeud.

Selon un mode de mise en oeuvre, la préamplification comprend un écoulement du signal de courant dans un élément résistif couplé entre une borne de commande d'un transistor couplée au premier noeud et une borne de conduction du transistor couplée au deuxième noeud, et une génération d'un courant de polarisation sur le deuxième noeud.

Selon un mode de mise en oeuvre, le décalage sur le troisième noeud du niveau du signal de tension du deuxième noeud comprend une génération d'un courant d'ajustement, d'intensité commandée par le signal de commande, dans un élément résistif couplé entre le deuxième noeud et le troisième noeud.

Selon un mode de mise en oeuvre, le procédé comprend la génération du signal de commande en fonction d'un signal de sortie de l'amplification différentielle de manière à décaler le niveau du signal de tension du deuxième noeud sur le troisième noeud à un niveau centré sur le niveau de tension de la diode photoréceptrice sur le premier noeud.

Selon un mode de mise en oeuvre, afin de décaler le niveau du signal de sur le troisième noeud à un niveau centré sur le niveau de tension de la diode photoréceptrice, une calibration comprend une première étape, destinée à des premières conditions de lumière ambiante, comprenant une identification d'une première valeur du signal de commande permettant de décaler le niveau du signal de tension sur le troisième noeud au même niveau que la tension sur le premier noeud de la diode photoréceptrice, et une deuxième étape, destinée à des deuxièmes conditions de lumière ambiante, comprenant une identification d'une deuxième valeur du signal de commande permettant de décaler le niveau du signal de tension sur le troisième noeud au même niveau que la tension sur le premier noeud de la diode photoréceptrice.

Selon un mode de mise en oeuvre, la calibration comprend l'établissement d'une valeur calibrée du signal de commande égale à la première valeur additionnée de la moitié de la différence entre la première valeur et la deuxième valeur.

Selon un mode de mise en oeuvre, le procédé comprend en outre un traitement du signal issu de l'amplification différentielle de manière à fournir un signal de sortie carré, une génération d'une pluralité de phases d'un signal d'horloge ayant des cycles d'horloge, et une détection dans le signal de sortie d'un indicateur de début de paquet de bits, une identification de l'une desdites phases dont le cycle d'horloge commence au plus près de l'indicateur de début de paquet de bits, et une délimitation, dans le signal de sortie, des bits d'un paquets de bits sur les cycles d'horloge du signal d'horloge à la phase identifiée.

Selon un autre aspect, il est proposé une méthode de communication par signal de lumière comportant un procédé de réception tel que défini ci-avant, et une émission comprenant une génération, par une diode photoémettrice, du signal de lumière véhiculant des paquets de bits, les paquets de bits successifs étant séparés dans le temps d'une durée au moins égale à la durée d'un paquet de bits.

Selon un mode de mise en oeuvre, le procédé de réception et l'émission collaborent dans la calibration de sorte que l'émission comprend une génération du signal de lumière dans la première étape, les premières conditions de lumière ambiante comprenant une luminosité ambiante uniquement, et de sorte que l'émission comprend une génération du signal de lumière en continu dans la deuxième étape, les deuxièmes conditions de lumière ambiante comprenant la luminosité ambiante et la luminosité du signal émis.

Selon un mode de mise en oeuvre, le procédé de réception et l'émission comprennent chacun une génération de signaux d'horloge ayant des cycles d'horloge respectifs et réglées à la même fréquence, l'émission comprenant une délimitation, sur les cycles d'horloge du signal d'horloge, de la génération les bits des paquets de bits émis, le procédé de réception comprenant une délimitation, sur les cycles d'horloge du signal d'horloge, de la détection des bits des paquets de bits reçus.

D'autres avantages et caractéristiques de l'invention apparaîtront à l'examen de la description détaillée de modes de réalisation et de mise en oeuvre, nullement limitatifs, et des dessins annexés, sur lesquels :
[Fig.1] ;
[Fig.2] ;
[Fig.3] ;
[Fig.4] ;
[Fig.5] ;

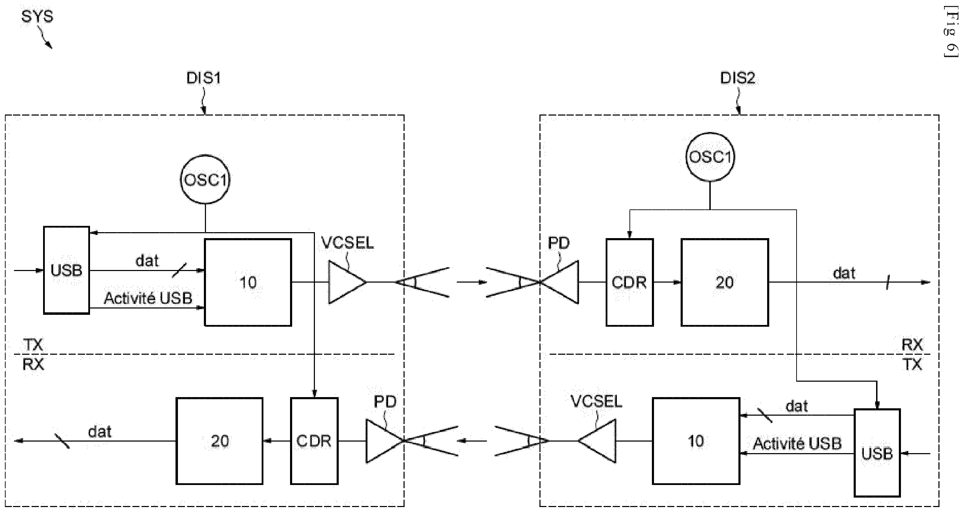

[Fig.6] illustrent des modes de réalisation et de mise en oeuvre de l'invention.

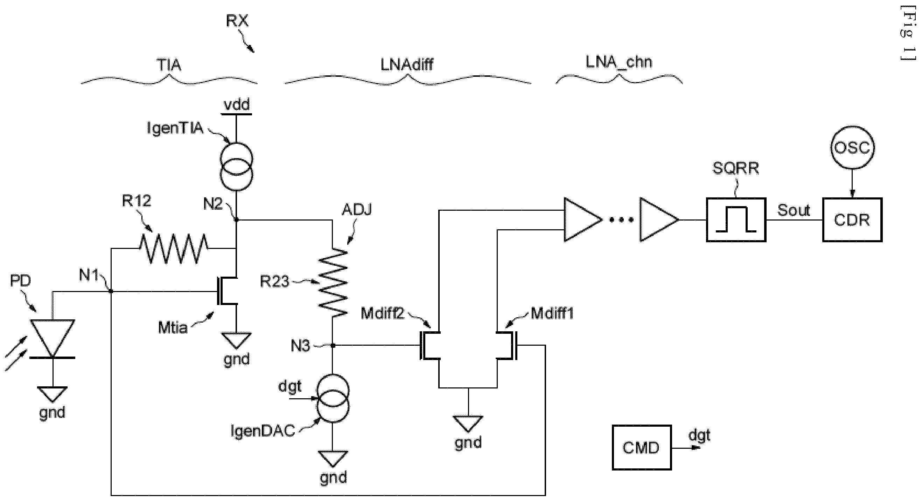

La figure 1 illustre un exemple de dispositif récepteur de communication par signal de lumière RX. Le dispositif récepteur RX comporte une diode photoréceptrice PD configurée pour générer un signal de courant sur un premier noeud N1 à partir d'un signal de lumière reçu, et issu d'un milieu extérieur.

Un préamplificateur TIA est configuré pour convertir le signal de courant sur le premier noeud N1 en un signal de tension sur un deuxième noeud N2.

Par exemple, le préamplificateur TIA peut être du type amplificateur transimpédance résistif, et comporter un transistor Mtia dont la borne de commande, c'est-à-dire la grille, est couplée au premier noeud N1 et dont une borne de conduction, c'est-à-dire le drain, est couplée au deuxième noeud N2. L'autre borne de conduction du transistor Mtia, c'est-à-dire la source, est couplée à une borne de tension de référence de masse gnd. Un élément résistif R12 est couplé entre le premier noeud N1 et le deuxième noeud N2 du circuit, c'est-à-dire entre la grille et le drain du transistor Mtia. Enfin, un circuit générateur de courant IgenTIA est configuré pour générer un courant dit de polarisation sur le deuxième noeud N2.

En condition de présence de lumière, par exemple une quantité quelconque de lumière ambiante, la diode photoréceptrice est en régime de photogénération de charges électriques, impose sa tension de seuil constante à ses bornes et génère un courant photogénéré sur le premier noeud N1 et donc à travers l'élément résistif R12.

Ainsi, dans cet exemple élémentaire d'amplificateur transimpédance résistif TIA, le signal de tension sur le deuxième noeud N2 correspond à la tension de seuil de la diode présente sur le premier noeud N1 additionné du produit de la résistance de l'élément résistif R12 par l'intensité du courant photogénéré traversant l'élément résistif R12.

Un amplificateur différentiel LNAdiff comporte une première entrée connectée au premier noeud N1 et une deuxième entrée connectée à un troisième noeud N3 couplé au deuxième noeud N2 par l'intermédiaire d'un circuit d'ajustement ADJ. Le circuit d'ajustement ADJ est configuré pour décaler le niveau du signal de tension du deuxième noeud N2, sur le troisième noeud N3, de manière commandée par un signal de commande dgt.

Le circuit d'ajustement ADJ peut comporter un élément résistif R23 couplé entre le deuxième noeud N2 et le troisième noeud N3 et un circuit générateur de courant IgenDAC configuré pour générer un courant d'ajustement sur le troisième noeud N3, à une intensité commandée par le signal de commande dgt. L'amplitude du décalage, sur le troisième noeud N3, du niveau de tension du deuxième noeud N2 est ainsi égal au produit de l'intensité du courant d'ajustement par la résistance de l'élément résistif R23.

Le circuit générateur de courant IgenDAC peut avantageusement être un circuit du type convertisseur numérique analogique, configuré pour générer un courant d'ajustement ayant une intensité précisément commandée par un signal de commande numérique dgt. Le signal de commande numérique dgt est usuellement un mot binaire codant un nombre ou une valeur, l'intensité du courant d'ajustement étant précisément proportionnelle à la valeur codée dgt.

Le dispositif de réception RX peut comporter un circuit de commande CMD configuré pour générer le signal de commande dgt en fonction d'un signal de sortie de l'amplificateur différentiel LNAdiff, en particulier de manière à transmettre sur la deuxième entrée N3 de l'amplificateur différentiel LNAdiff, le niveau de tension du deuxième noeud N2 décalé à un niveau centré sur le niveau tension de la première entrée N1 de l'amplificateur différentiel LNAdiff, c'est-à-dire le premier niveau de tension de la diode photoréceptrice PD présent sur le premier noeud N1.

L'amplificateur différentiel LNAdiff fournit sur deux branches de sortie différentielles une mesure de la différence entre les niveaux des signaux de tensions présents sur ses deux entrées N1, N3.

Dans cet exemple, un étage de sortie comporte une chaine d'amplificateurs LNA_chn, par exemple des amplificateurs du type amplificateur faible bruit (usuellement « LNA » pour « low noise amplifier » en anglais), permet d'amplifier le signal représentatif de la mesure en sortie de l'amplificateur différentiel LNAdiff.

L'étage de sortie comporte un circuit d'échelonnage SQRR (usuellement « squarer » en anglais) adapté pour fournir un signal de sorite carré Sout, exploitable par des circuits numériques, correspondant aux variations du signal analogique amplifié. Conventionnellement, un signal « carré » est un signal ayant deux niveaux de tension, un niveau haut et un niveau bas, et des transitions très rapides (fronts montants, fronts descendants) entre les deux niveaux.

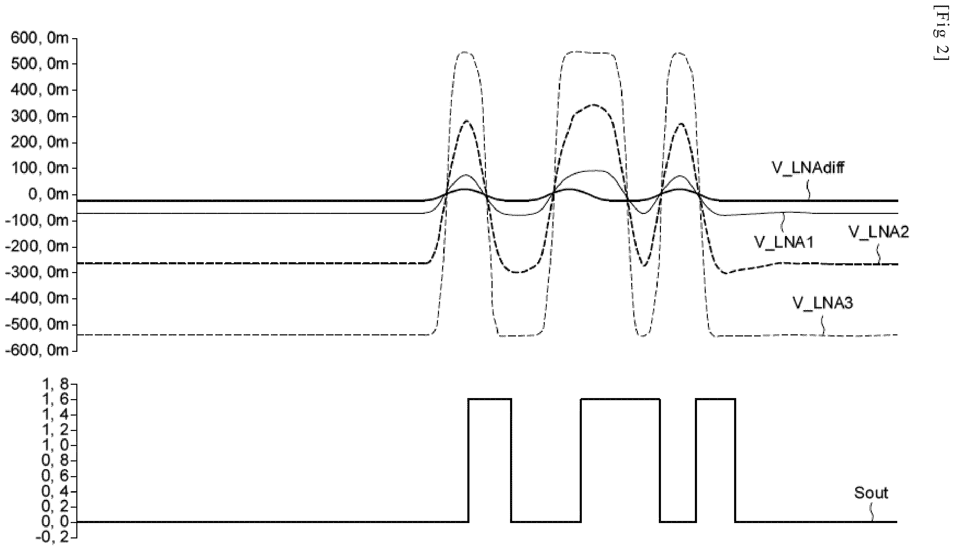

On se réfère à cet égard à la figure 2.

La figure 2 illustre les courbes dans le temps du signal représentatif de la mesure en sortie de l'amplificateur différentiel V_LNAdiff, et des signaux de sorties des amplificateurs successifs V_LN1, V_LNA2, V_LN3 de la chaine d'amplificateurs faible bruit LNA_chn. La courbe dans le temps du signal de sorite carré Sout issue du dernier signal amplifié V_LN3 est également illustré.

Afin déclencher sélectivement les seuils du circuit d'échelonnage SQRR il est nécessaire que les signaux amplifiés successifs soient tous centrées sur 0V, et donc que le signal représentatif de la mesure en sortie de l'amplificateur différentiel V_LNAdiff soit centré sur 0 V.

A cet égard on rappelle que le circuit d'ajustement ADJ permet de centrer le niveau de la deuxième entrée N3 de l'amplificateur différentiel LNAdiff sur le niveau de la première entrée N1 de l'amplificateur différentiel LNAdiff.

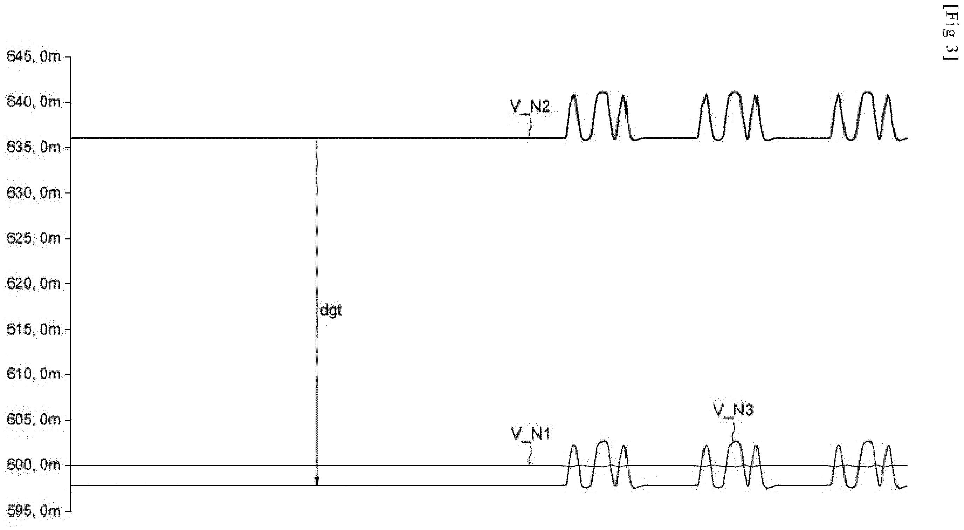

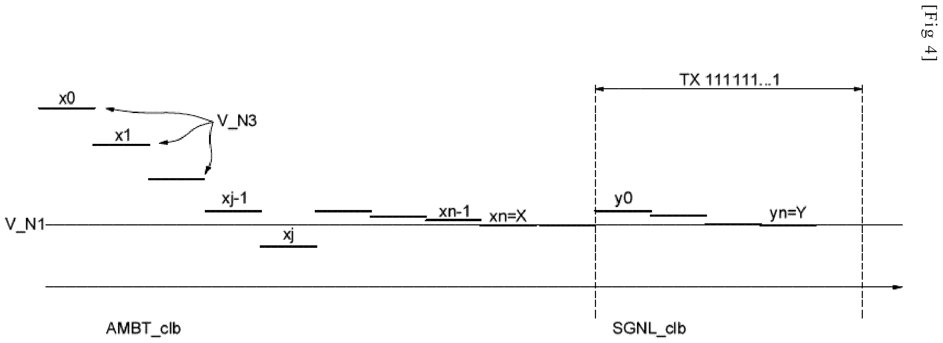

On se réfère désormais aux figures 3 et 4.

La figure 3 illustre les courbes dans le temps des niveaux de tension du premier noeud V_N1, du signal de tension présent sur le deuxième noeud V_N2 et du signal de tension décalé sur le troisième noeud V_N3.

La valeur du signal de commande numérique dgt est avantageusement choisie pour ramener le niveau du signal de tension V_N2 à un niveau décalé V_N3 centré sur le niveau de tension de la diode photoréceptrice V_N1, au moyen du circuit d'ajustement ADJ.

Le signal de tension décalé V_N3 est centré sur le niveau de la tension de seuil V_N1 lorsque l'écart entre le niveau de la tension de seuil V_N1 et le niveau bas du signal de tension décalé V_N3 est égal ou sensiblement égal à l'écart entre le niveau de la tension de seuil V_N1 et le niveau haut du signal de tension décalé V_N3.

A cet égard, le circuit de commande CMD peut être configurés pour accéder aux branches de sorties de l'amplificateur différentiel LNAdiff, fournissant une information sur la différence entre les niveaux des tensions présentes sur la première entrée N1 et sur la deuxième entrée N3.

Le circuit de commande CMD peut générer des signaux de commande dgt de valeurs successives visant à amener à zéro la différence entre les deux entrées de l'amplificateur différentiel LNAdiff. Un décalage supplémentaire d'une valeur correspondant à la moitié de l'amplitude du signal de tension décalé V_N3, est ensuite appliqué de façon préférentielle et avantageuse avec le processus de calibration décrit ci-après en relation avec la figure 4.

La figure 4 illustre un processus de calibration, par exemple mis en oeuvre par le circuit de commande CMD, permettant de décaler le niveau du signal de tension décalé V_N3 à un niveau centré sur le niveau de tension de la diode photoréceptrice V_N1.

La calibration comprend une première étape AMBT_clb, destinée à des premières conditions de lumière ambiante, par exemple des conditions dans lesquelles une quantité donnée de lumière ambiante est présente et le signal de la communication par signal de lumière est absent.

La calibration comprend une deuxième étape SGNL_clb, destinée à des deuxièmes conditions de lumière ambiante, par exemple des conditions dans lesquelles la même quantité de lumière ambiante est présente et le signal de la communication par signal de lumière est présent en continu. Le dispositif récepteur RX est avantageusement configuré pour coopérer avec un émetteur TX à cet égard, tel que décrit ci-après en relation avec la figure 6.

On considère que la quantité de lumière ambiante varie de manière beaucoup plus lente que le temps de mise en oeuvre de la calibration et d'une communication par signal de lumière, et ainsi que la quantité de lumière ambiante est constante pendant la première étape AMBT_clb et pendant la deuxième étape SGNL_clb.

La première étape AMBT_clb comprend une identification d'une première valeur X du signal de commande dgt permettant de décaler le niveau du signal de tension sur le troisième noeud V_N3 au même niveau que la tension sur le premier noeud V_N1 de la diode photoréceptrice PD, dans les premières conditions de lumière ambiante.

A cet égard, la première étape AMBT_clb peut comprendre un algorithme d'auto-zéro entre les branches de sorties de l'amplificateur différentiel LNAdiff par variation des niveaux de tension sur les bornes d'entrée N1, N3 de l'amplificateur différentiel LNAdiff. L'algorithme d'auto-zéro comprend par exemple une séquence d'itérations x0, x1, ..., xn-1, xn, comprenant chacune une lecture du signal de sortie de l'amplificateur différentiel LNAdiff, représentatif de la différence entre le niveau du signal de tension décalé V_N3 et le niveau de la tension de seuil de la diode V_N1. A chaque itération, si le niveau du signal de tension décalé V_N3 est supérieur au niveau de la tension de seuil de la diode V_N1, la valeur du signal de commande dgt est augmentée d'un pas donné. La séquence s'arrête lorsqu'il est atteint une différence nulle ou une différence suffisamment proche de zéro. Avantageusement, lorsqu'à une itération donnée xj la différence devient négative, l'algorithme peut prévoir de revenir à la valeur de l'itération précédente xj-1, et de reprendre la séquence avec un pas plus petit jusqu'à atteindre ou être suffisamment proche d'une différence nulle xn. La valeur de la dernière itération xn donne une première valeur X relative aux premières conditions de lumière ambiante.

La deuxième étape SNGL_clb comprend une identification d'une deuxième valeur Y du signal de commande dgt permettant de décaler le niveau du signal de tension sur le troisième noeud N3 au même niveau que la tension sur le premier noeud N1 de la diode photoréceptrice PD, dans les deuxièmes conditions de lumière ambiante.

A cet égard, la deuxième étape SNGL_clb peut comprendre le même algorithme d'auto-zéro entre les branches de sorties de l'amplificateur différentiel LNAdiff par variation des niveaux de tension sur les bornes d'entrée N1, N3 de l'amplificateur différentiel LNAdiff, comprenant une séquence d'itérations y0, ..., yn, augmentant la valeur du signal de commande dgt d'un pas donné jusqu'à atteindre une différence nulle ou une différence suffisamment proche de zéro. La valeur du signal de commande dgt de la première itération de cette mise en oeuvre est avantageusement choisie égale à la première valeur X (c'est-à-dire la valeur de la dernière itération xn de la première étape AMBT_cal). Avantageusement, la séquence de la deuxième étape SNGL_cal peut être faite avec le plus petit pas. La valeur de la dernière itération yn donne une deuxième valeur Y relative aux deuxièmes conditions de lumière ambiante.

D'autre algorithmes d'auto-zéro peuvent bien entendu être mis en oeuvre dans la première étape AMBT_cal et dans la deuxième étape SGNL_cal, par exemple pour bénéficier d'une plus grande précision ou d'un temps de convergence plus rapide.

La première valeur X permet une calibration des entrées de l'amplificateur différentiel LNAdiff pour la lumière ambiante sans signal de la communication, c'est-à-dire pour le niveau bas du signal de communication dans l'environnement dans lequel se trouve le dispositif RX. La deuxième valeur Y permet une calibration des entrées de l'amplificateur différentiel LNAdiff pour la lumière ambiante en présence du signal de la communication, c'est-à-dire pour le niveau haut du signal de communication dans l'environnement dans lequel se trouve le dispositif RX.

A partir de la première valeur X et de la deuxième valeur Y, la calibration comprend l'établissement d'une valeur calibrée du signal de commande dgt, égale à la première valeur X additionnée de la moitié de la différence entre la première valeur X et la deuxième valeur Y, soit dgt=X+(Y-X)/2. Ainsi, la valeur calibré dgt=X+(Y-X)/2 du signal de commande permet de parfaitement centrer le niveau du signal de tension décalée V_N3 sur le niveau V_N1 de la tension de seuil de la diode PD, tel qu'illustré à la figure 3 quel que soit l'environnement.

En effet, la calibration décrite ci-avant permet de tenir compte de la luminosité ambiante (lors de la première étape AMBT_clb) et de tenir compte de l'amplitude du signal reçu (lors de la deuxième étape SGNL_clb), de sorte que les entrées N1, N3 de l'amplificateur différentiel LNAdiff sont parfaitement équilibrées, notamment quelle que soit l'intensité de la lumière ambiante et quelle que soit la distance entre le dispositif récepteur et un émetteur fournissant le signal de la communication par signal de lumière.

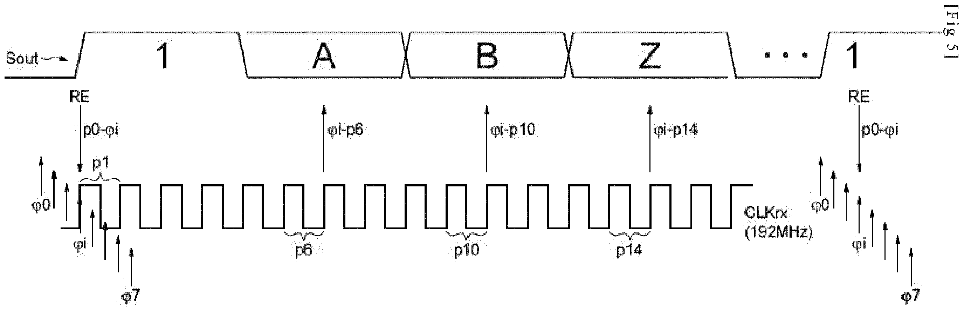

La figure 5 illustre un exemple de communication par signal de lumière, pour laquelle le dispositif récepteur RX décrit précédemment en relation avec les figures 1 à 4 est avantageusement adapté.

On rappelle, en référence à la figure 1, que le dispositif récepteur RX comporte un étage de sortie LNA_chn, SQRR configuré pour fournir un signal de sortie carré Sout à partir des branches de sorties de l'amplificateur différentiel LNAdiff.

En outre, le dispositif récepteur RX comporte un étage de récupération de signal CDR et un circuit oscillateur OSC configuré pour générer une pluralité de phases ϕ0, ϕi, ϕ7 d'un signal d'horloge ayant des cycles d'horloge.

Par exemple, l'oscillateur OSC est configuré pour générer un signal d'horloge CLKrx, typiquement un signal périodique carré, ayant des cycles d'horloge, un cycle d'horloge étant typiquement une période p6, p10, p14 du signal périodique et étant typiquement identifié par un front montant du signal périodique. Par exemple le signal d'horloge CLKrx peut avoir une fréquence de sensiblement 200MHz (mégaHertz), par exemple 192 MHz, et être généré sur huit phases ϕ0, ϕi, ϕ7 espacées de manière homogène, c'est-à-dire ayant un écart de sensiblement 0,625 ns (nanosecondes) entre deux phases.

Dans cet exemple de communication par signal de lumière, un paquet de bits 1ABZ a été reçu par le dispositif récepteur RX et retranscrit dans le signal de sortie Sout.

L'étage de récupération de signal CDR est configuré pour détecter dans le signal de sortie Sout un indicateur de début de paquet de bits RE, par exemple un front montant RE d'un bit égal à 1, et identifier parmi les différentes phases cp0-cp7, la phase ϕi dont un cycle d'horloge p1 commence au plus près de l'indicateur de début de paquet de bits RE.

Ainsi, la phase identifiée ϕi du signal d'horloge CLKrx est sélectionnée pour cadencer la récupération du signal reçu, et la première période p1 de la phase identifiée ϕi, alignée avec l'indicateur de début de paquet RE, servira de référence (ou, autrement dit, de « point de départ ») dans le signal d'horloge CLKrx pour la récupération du signal.

En effet, à partir de la période de référence p1 dans la phase identifée ϕi, l'étage de récupération CDR est configuré pour délimiter les différents bits ABZ du paquet de bits, en fonction de la convention de communication attendue. Dans cet exemple, chaque bit 1, A, B, Z du paquet est envoyé sur quatre périodes du signal d'horloge CLKrx, ainsi on peut détecter le centre du bit A après les quatre périodes du bit de début de paquet « 1 » et après deux bits (milieu de A), c'est-à-dire après la sixième période p6. De façon analogue, le bit B du paquet est détecté sur le front montant après la dixième période p10 et le bit Z du paquet est détecté sur le front montant après la quatorzième période p14 de la phase identifiée ϕi du signal d'horloge CLKrx.

Par conséquent, même en l'absence d'un signal d'horloge partagé entre l'émetteur et le récepteur de la communication par signal de lumière, les différents bits d'un paquet de bits 1ABZ peuvent être précisément délimités par rapport à l'indicateur de début de paquet RE, sur les périodes de la phase identifiée ϕi du signal d'horloge interne du récepteur RX.

Cela permet de résister à une différence de sensiblement 3% entre les fréquences qui cadencent respectivement l'émission et la réception du signal de la communication par signal de lumière.

La figure 6 illustre un exemple de système de communication par signal de lumière SYS comportant un dispositif récepteur RX tel que décrit précédemment en relation avec les figures 1 à 5, et un émetteur TX tel que mentionné précédemment.

En pratique, la communication peut être faite entre deux dispositifs de communication par signal de lumière DIS1, DIS2, comportant chacun un récepteur RX, c'est-à-dire par exemple le dispositif récepteur RX décrit précédemment en relation avec les figures 1 à 5, et un émetteur. Le récepteur RX de chaque dispositif DIS1/DIS2 est destiné à communiquer avec l'émetteur TX de l'autre dispositif DIS2/DIS 1.

L'émetteur de chaque dispositif DIS1/DIS2 comporte une diode photoémettrice VCSEL configurée pour générer le signal de lumière modulé pour véhiculer des paquets de bits. Les paquets de bits peuvent être séparés dans le temps d'une durée au moins égale à la durée d'un paquet de bits (par exemple tels qu'illustré par la figure 5 ou par la figure 3, après réception par le récepteur RX de l'autre dispositif DIS2/DIS1).

En particulier, chaque dispositif DIS1, DIS2 comporte un circuit oscillateur OSC1, OSC2 interne respectif et indépendant de l'autre, configuré pour générer des signaux d'horloge internes réglés à la même fréquence, par exemple 192MHz.

L'émetteur TX de l'un des dispositifs DIS1/DIS2 est configuré pour délimiter, sur les cycles d'horloge de son signal d'horloge interne OSC1/OSC2, la génération des bits des paquets de bits 1ABZ émis, tandis que le récepteur RX de l'autre dispositif DIS2/DIS1 est configuré pour délimiter, sur les cycles d'horloge de son signal d'horloge interne OSC2/OSC1, la détection des bits d'un paquets de bits 1ABZ reçus.

Par ailleurs, de façon classique, l'émetteur TX comporte des moyens d'ordonnancement et d'encodage 10 aptes à piloter la diode photoémettrice VCSEL, ainsi qu'un étage de données, par exemple une interface USB, apte à fournir les données dat aux moyens d'ordonnancement et d'encodage 10, ainsi qu'un signal d'activité USB.

Le récepteur RX comporte quant à lui, en sortie de l'étage de récupération du signal CDR, des moyens classiques de démultiplexage et de décodage 20 apte à fournir un signal de donnée dat.

En particulier, le récepteur RX de l'un des dispositifs DIS1/DIS2 et l'émetteur TX de l'autre dispositif DIS2/DIS1, peuvent collaborer dans la calibration du récepteur RX décrite précédemment en relation avec la figure 4. La collaboration est avantageusement faite de sorte que l'émetteur TX ne génère pas le signal de lumière dans la première étape AMBT_clb de la calibration, afin que les premières conditions de lumière ambiante comprennent effectivement la luminosité ambiante uniquement ; et de sorte que l'émetteur TX génère le signal de lumière en continu dans la deuxième étape SGNL_clb de la calibration, afin que les deuxièmes conditions de lumière ambiante comprennent effectivement la luminosité ambiante et la luminosité du signal émis.

## Revendications

1. Dispositif récepteur de communication par signal de lumière comportant une diode photoréceptrice (PD) configurée pour générer un signal de courant sur un premier noeud (N1) à partir d'un signal de lumière reçu, un préamplificateur (TIA) configuré pour convertir le signal de courant sur le premier noeud (N1) en un signal de tension sur un deuxième noeud (N2), **caractérisé en ce qu'**il comprend un amplificateur différentiel (LNAdiff) comportant une première entrée connectée au premier noeud (N1) et une deuxième entrée connectée à un troisième noeud (N3) couplé au deuxième noeud (N2) par l'intermédiaire d'un circuit d'ajustement (ADJ) configuré pour décaler le niveau du signal de tension du deuxième noeud (N2), sur le troisième noeud (N3), de manière commandée par un signal de commande (dgt).

2. Dispositif selon la revendication 1, dans lequel le préamplificateur comporte un transistor (Mtia) ayant une borne de commande couplée au premier noeud (N1) et une borne de conduction couplée au deuxième noeud (N2), un élément résistif couplé entre le premier noeud (N1) et le deuxième noeud (N2), et un circuit générateur de courant (IgenTIA) configuré pour générer un courant de polarisation sur le deuxième noeud (N2).

3. Dispositif selon l'une des revendications 1 ou 2, dans lequel le circuit d'ajustement (ADJ) comporte un élément résistif (R23) couplé entre le deuxième noeud (N2) et le troisième noeud (N3) et un circuit générateur de courant (IgenDAC) configuré pour générer un courant d'ajustement sur le troisième noeud (N3), à une intensité commandée par le signal de commande (dgt).

4. Dispositif selon l'une des revendications précédentes, comportant en outre un circuit de commande (CMD) configuré pour générer le signal de commande (dgt) en fonction d'un signal de sortie de l'amplificateur différentiel (LNAdiff) de manière à décaler le niveau du signal de tension du deuxième noeud (N2) sur le troisième noeud (N3) à un niveau centré sur le niveau de tension de la diode photoréceptrice (PD) sur le premier noeud (N1).

5. Dispositif selon la revendication 4, dans lequel le circuit de commande (CMD), afin de décaler le niveau du signal de sur le troisième noeud (N3) à un niveau centré sur le niveau de tension de la diode photoréceptrice (PD), est configuré pour effectuer une calibration comprenant une première étape (AMBT_clb), destinée à des premières conditions de lumière ambiante, comprenant une identification d'une première valeur (X) du signal de commande (dgt) permettant de décaler le niveau du signal de tension sur le troisième noeud (N3) au même niveau que la tension sur le premier noeud (N1) de la diode photoréceptrice (PD), et une deuxième étape (SGNL_clb), destinée à des deuxièmes conditions de lumière ambiante, comprenant une identification d'une deuxième valeur (Y) du signal de commande (dgt) permettant de décaler le niveau du signal de tension sur le troisième noeud (N3) au même niveau que la tension sur le premier noeud (N1) de la diode photoréceptrice (PD).

6. Dispositif selon la revendication 5, dans lequel la calibration comprend l'établissement d'une valeur calibrée du signal de commande (dgt) égale à la première valeur additionnée de la moitié de la différence entre la première valeur et la deuxième valeur (X+(Y-X)/2).

7. Dispositif selon l'une des revendications précédentes, dans lequel le dispositif récepteur comporte en outre un étage de sortie (LNA_chn, SQRR) configuré pour fournir un signal de sortie carré (Sout) à partir de sorties de l'amplificateur différentiel (LNAdiff), un circuit oscillateur (OSC) configuré pour générer une pluralité de phases d'un signal d'horloge ayant des cycles d'horloge, et un étage de récupération de signal (CDR) configuré pour détecter dans le signal de sortie un indicateur de début de paquet de bits (RE), identifier l'une desdites phases (ϕi) dont le cycle d'horloge commence au plus près de l'indicateur de début de paquet de bits, et délimiter, dans le signal de sortie (Sout), des bits d'un paquets de bits (A, B, Z) sur les cycles d'horloge du signal d'horloge à la phase identifiée.

8. Système de communication par signal de lumière (SYS) comportant un dispositif récepteur selon l'une des revendications 1 à 7, et un dispositif émetteur comprenant une diode photoémettrice de configurée pour générer le signal de lumière véhiculant des paquets de bits, les paquets de bits successifs étant séparés dans le temps d'une durée au moins égale à la durée d'un paquet de bits.

9. Système selon la revendication 8 prise en combinaison avec la revendication 5, dans lequel le dispositif récepteur et le dispositif émetteur collaborent dans la calibration de sorte que le dispositif émetteur ne génère pas le signal de lumière dans la première étape (AMBT_clb), les premières conditions de lumière ambiante comprenant une luminosité ambiante uniquement, et de sorte que le dispositif émetteur génère le signal de lumière en continu dans la deuxième étape (SGNL_clb), les deuxièmes conditions de lumière ambiante comprenant la luminosité ambiante et la luminosité du signal émis.

10. Système selon l'une des revendications 8 ou 9, dans lequel le dispositif récepteur et le dispositif émetteur comportent chacun un circuit oscillateur (OSC) indépendant, configurés pour générer des signaux d'horloge respectifs ayant des cycles d'horloge et réglés à la même fréquence, le dispositif émetteur étant configuré pour délimiter, sur les cycles d'horloge du signal d'horloge, la génération des bits des paquets de bits (A, B, Z) émis, le dispositif récepteur étant configuré pour délimiter, sur les cycles d'horloge du signal d'horloge, la détection des bits d'un paquets de bits (A, B, Z) reçus.

11. Procédé de réception d'une communication par signal de lumière comprenant :
- une génération d'un signal de courant sur un premier noeud (N1) à partir d'un signal de lumière reçu, par une diode photoréceptrice (PD),
- une préamplification (TIA) convertissant le signal de courant sur le premier noeud (N1) en un signal de tension sur un deuxième noeud (N2), **caractérisé en ce que** le procédé comprend:
- un décalage (ADJ), sur un troisième noeud (N3) du niveau du signal de tension du deuxième noeud (N2) de manière commandée par un signal de commande (dgt),
- une amplification différentielle (LNAdiff) entre la tension présente sur le premier noeud (N1) et la tension présente sur le troisième noeud (N3),.

12. Procédé selon la revendication 11, dans lequel la préamplification (TIA) comprend un écoulement du signal de courant dans un élément résistif (R12) couplé entre une borne de commande d'un transistor (Mtia) couplée au premier noeud et une borne de conduction du transistor (Mtia) couplée au deuxième noeud (N2), et une génération d'un courant de polarisation sur le deuxième noeud (N2).

13. Procédé selon l'une des revendications 11 ou 12, dans lequel le décalage (ADJ) sur le troisième noeud (N3) du niveau du signal de tension du deuxième noeud (N2) comprend une génération d'un courant d'ajustement, d'intensité commandée par le signal de commande (dgt), dans un élément résistif (R23) couplé entre le deuxième noeud (N2) et le troisième noeud (N3).

14. Procédé selon l'une des revendications 11 à 13, comprenant la génération du signal de commande (dgt) en fonction d'un signal de sortie de l'amplification différentielle (LNAdiff) de manière à décaler le niveau du signal de tension du deuxième noeud (N2) sur le troisième noeud (N3) à un niveau centré sur le niveau de tension de la diode photoréceptrice (PD) sur le premier noeud (N1).

15. Procédé selon la revendication 14, dans lequel, afin de décaler le niveau du signal de sur le troisième noeud (N3) à un niveau centré sur le niveau de tension de la diode photoréceptrice (PD), une calibration comprend une première étape (AMBT_clb), destinée à des premières conditions de lumière ambiante, comprenant une identification d'une première valeur (X) du signal de commande (dgt) permettant de décaler le niveau du signal de tension sur le troisième noeud (N3) au même niveau que la tension sur le premier noeud (N1) de la diode photoréceptrice (PD), et une deuxième étape (SGNL_clb), destinée à des deuxièmes conditions de lumière ambiante, comprenant une identification d'une deuxième valeur (Y) du signal de commande (dgt) permettant de décaler le niveau du signal de tension sur le troisième noeud (N3) au même niveau que la tension sur le premier noeud (N1) de la diode photoréceptrice (PD).

16. Procédé selon la revendication 15, dans lequel la calibration comprend l'établissement d'une valeur calibrée du signal de commande (dgt) égale à la première valeur additionnée de la moitié de la différence entre la première valeur et la deuxième valeur (X+(Y-X)/2).

17. Procédé selon l'une des revendications 11 à 16, comprenant en outre un traitement du signal issu de l'amplification différentielle (LNAdiff) de manière à fournir un signal de sortie carré (Sout), une génération (OSC) d'une pluralité de phases d'un signal d'horloge ayant des cycles d'horloge, et une détection dans le signal de sortie (Sout) d'un indicateur de début de paquet de bits (RE), une identification de l'une desdites phases (ϕi) dont le cycle d'horloge commence au plus près de l'indicateur de début de paquet de bits (RE), et une délimitation, dans le signal de sortie (Sout), des bits d'un paquets de bits (A, B, Z) sur les cycles d'horloge du signal d'horloge à la phase identifiée.

18. Méthode de communication par signal de lumière (SYS) comportant un procédé de réception selon l'une des revendications 11 à 17, et une émission comprenant une génération, par une diode photoémettrice, du signal de lumière véhiculant des paquets de bits, les paquets de bits successifs étant séparés dans le temps d'une durée au moins égale à la durée d'un paquet de bits.

19. Méthode selon la revendication 18 prise en combinaison avec la revendication 15, dans laquelle le procédé de réception et l'émission collaborent dans la calibration de sorte que l'émission comprend une génération du signal de lumière dans la première étape (AMBT_clb), les premières conditions de lumière ambiante comprenant une luminosité ambiante uniquement, et de sorte que l'émission comprend une génération du signal de lumière en continu dans la deuxième étape (SGNL_clb), les deuxièmes conditions de lumière ambiante comprenant la luminosité ambiante et la luminosité du signal émis.

20. Méthode selon l'une des revendications 18 ou 19, dans laquelle le procédé de réception et l'émission comprennent chacun une génération de signaux d'horloge ayant des cycles d'horloge respectifs et réglées à la même fréquence, l'émission comprenant une délimitation, sur les cycles d'horloge du signal d'horloge, de la génération les bits des paquets de bits (A, B, Z) émis, le procédé de réception comprenant une délimitation, sur les cycles d'horloge du signal d'horloge, de la détection des bits des paquets de bits (A, B, Z) reçus.

## Patentansprüche

1. Empfangsvorrichtung für Kommunikation über Lichtsignal, die eine lichtempfangende Diode (PD), die so konfiguriert ist, dass sie ein Stromsignal an einem ersten Knoten (N1) auf Grundlage eines empfangenen Lichtsignals erzeugt, einen Vorverstärker (TIA) umfasst, der so konfiguriert ist, dass er das Stromsignal am ersten Knoten (N1) in ein Spannungssignal an einem zweiten Knoten (N2) umwandelt, **dadurch gekennzeichnet, dass** sie einen Differenzverstärker (LNAdiff) umfasst, der einen ersten Eingang, der mit dem ersten Knoten (N1) verbunden ist, und einen zweiten Eingang umfasst, der mit einem dritten Knoten (N3) verbunden ist, welcher mit dem zweiten Knoten (N2) mittels einer Einstellschaltung (ADJ) gekoppelt ist, die so konfiguriert ist, dass sie den Pegel des Spannungssignals vom zweiten Knoten (N2) am dritten Knoten (N3) über ein Steuersignal (dgt) gesteuert verschiebt.

2. Vorrichtung nach Anspruch 1, wobei der Vorverstärker einen Transistor (Mtia), der einen mit dem ersten Knoten (N1) gekoppelten Steueranschluss und einen mit dem zweiten Knoten (N2) gekoppelten Leitungsanschluss aufweist, ein zwischen den ersten Knoten (N1) und den zweiten Knoten (N2) gekoppeltes Widerstandselement, und eine Stromerzeugungsschaltung (IgenTIA) umfasst, die so konfiguriert ist, dass sie einen Vorspannungsstrom am zweiten Knoten (N2) erzeugt.

3. Vorrichtung nach einem der Ansprüche 1 oder 2, wobei die Einstellschaltung (ADJ) ein zwischen den zweiten Knoten (N2) und den dritten Knoten (N3) gekoppeltes Widerstandselement (R23) und eine Stromerzeugungsschaltung (IgenDAC) umfasst, die so konfiguriert ist, dass sie einen Einstellstrom am dritten Knoten (N3) mit einer über das Steuersignal (dgt) gesteuerten Stärke erzeugt.

4. Vorrichtung nach einem der vorstehenden Ansprüche, die weiter eine Steuerschaltung (CMD) umfasst, die so konfiguriert ist, dass sie das Steuersignal (dgt) in Abhängigkeit von einem Ausgangssignal des Differenzverstärkers (LNAdiff) erzeugt, um den Pegel des Spannungssignals vom zweiten Knoten (N2) am dritten Knoten (N3) auf einen Pegel zu verschieben, der auf dem Spannungspegel der lichtempfangenden Diode (PD) am ersten Knoten (N1) zentriert ist.

5. Vorrichtung nach Anspruch 4, wobei die Steuerschaltung (CMD), um den Pegel des Signals von am dritten Knoten (N3) auf einen Pegel zu verschieben, der auf dem Spannungspegel der lichtempfangenden Diode (PD) zentriert ist, so konfiguriert ist, dass sie eine Kalibrierung vornimmt, die einen ersten Schritt (AMBT_clb), der für erste Umgebungslichtbedingungen bestimmt ist, der ein Ermitteln eines ersten Wertes (X) des Steuersignals (dgt) umfasst, der es ermöglicht, den Pegel des Spannungssignals am dritten Knoten (N3) auf den gleichen Pegel wie die Spannung am ersten Knoten (N1) der lichtempfangenden Diode (PD) zu verschieben, und einen zweiten Schritt (SGNL_clb) umfasst, der für zweite Umgebungslichtbedingungen bestimmt ist, der ein Ermitteln eines zweiten Wertes (Y) des Steuersignals (dgt) umfasst, der es ermöglicht, den Pegel des Spannungssignals am dritten Knoten (N3) auf den gleichen Pegel wie die Spannung am ersten Knoten (N1) der lichtempfangenden Diode (PD) zu verschieben.

6. Vorrichtung nach Anspruch 5, wobei die Kalibrierung das Festlegen eines kalibrierten Werts des Steuersignals (dgt) gleich dem ersten Wert plus der Hälfte der Differenz zwischen dem ersten Wert und dem zweiten Wert (X+(Y-X)/2) umfasst.

7. Vorrichtung nach einem der vorstehenden Ansprüche, wobei die Empfangsvorrichtung weiter eine Ausgangsstufe (LNA_chn, SQRR), die so konfiguriert ist, dass sie ein Rechteck-Ausgangssignal (Sout) auf Grundlage von Ausgängen des Differenzverstärkers (LNAdiff) bereitstellt, eine Oszillatorschaltung (OSC), die so konfiguriert ist, dass sie eine Vielzahl von Phasen eines Taktsignals, das Taktzyklen aufweist, erzeugt, und eine Signalrückgewinnungsstufe (CDR) umfasst, die so konfiguriert ist, dass sie im Ausgangssignal einen Bitpaket-Startindikator (RE) erkennt, eine der Phasen (ϕi) ermittelt, deren Taktzyklus am nächsten am Bitpaket-Startindikator beginnt, und im Ausgangssignal (Sout) Bits eines Bitpakets (A, B, Z) auf die Taktzyklen des Taktsignals mit der ermittelten Phase begrenzt.

8. System zur Kommunikation über Lichtsignal (SYS), das eine Empfangsvorrichtung nach einem der Ansprüche 1 bis 7 und eine Sendevorrichtung umfasst, die eine lichtemittierende Diode umfasst, die so konfiguriert ist, dass sie das Lichtsignal erzeugt, das Bitpakete transportiert, wobei die aufeinanderfolgenden Bitpakete zeitlich um eine Dauer von mindestens gleich der Dauer eines Bitpakets getrennt sind.

9. System nach Anspruch 8 in Kombination mit Anspruch 5, wobei die Empfangsvorrichtung und die Sendevorrichtung bei der Kalibrierung so zusammenwirken, dass die Sendevorrichtung das Lichtsignal im ersten Schritt (AMBT_clb) nicht erzeugt, wobei die ersten Umgebungslichtbedingungen nur eine Umgebungshelligkeit umfassen, und so, dass die Sendevorrichtung das Lichtsignal im zweiten Schritt (SGNL_clb) kontinuierlich erzeugt, wobei die zweiten Umgebungslichtbedingungen die Umgebungshelligkeit und die Helligkeit des gesendeten Signals umfassen.

10. System nach einem der Ansprüche 8 oder 9, wobei die Empfangsvorrichtung und die Sendevorrichtung jeweils eine unabhängige Oszillatorschaltung (OSC) umfassen, die so konfiguriert sind, dass sie jeweilige Taktsignale erzeugen, die Taktzyklen aufweisen und auf die gleiche Frequenz geregelt sind, wobei die Sendevorrichtung so konfiguriert ist, dass sie die Erzeugung der Bits der gesendeten Bitpakete (A, B, Z) auf die Taktzyklen des Taktsignals begrenzt, wobei die Empfangsvorrichtung so konfiguriert ist, dass sie die Erkennung der Bits eines empfangenen Bitpakets (A, B, Z) auf die Taktzyklen des Taktsignals begrenzt.

11. Verfahren zum Empfangen einer Kommunikation über Lichtsignal, umfassend:
- eine Erzeugung eines Stromsignals an einem ersten Knoten (N1) auf Grundlage eines empfangenen Lichtsignals über eine lichtempfangende Diode (PD),
- eine Vorverstärkung (TIA), die das Stromsignal am ersten Knoten (N1) in ein Spannungssignal an einem zweiten Knoten (N2) umwandelt,
**dadurch gekennzeichnet, dass** das Verfahren umfasst:
- eine Verschiebung (ADJ), an einem dritten Knoten (N3), des Pegels des Spannungssignals des zweiten Knotens (N2), über ein Steuersignal (dgt) gesteuert,
- eine Differenzverstärkung (LNAdiff) zwischen der am ersten Knoten (N1) anliegenden Spannung und der am dritten Knoten (N3) anliegenden Spannung.

12. Verfahren nach Anspruch 11, wobei die Vorverstärkung (TIA) ein Fließen des Stromsignals in einem Widerstandselement (R12), das zwischen einen mit dem ersten Knoten gekoppelten Steueranschluss eines Transistors (Mtia) und einen mit dem zweiten Knoten (N2) gekoppelten Leitungsanschluss des Transistors (Mtia) gekoppelt ist, und eine Erzeugung eines Vorspannungsstroms am zweiten Knoten (N2) umfasst.

13. Verfahren nach einem der Ansprüche 11 oder 12, wobei die Verschiebung (ADJ), am dritten Knoten (N3), des Pegels des Spannungssignals des zweiten Knotens (N2) eine Erzeugung eines Einstellstroms mit einer über das Steuersignal (dgt) gesteuerten Stärke in einem zwischen den zweiten Knoten (N2) und den dritten Knoten (N3) gekoppelten Widerstandselement (R23) umfasst.

14. Verfahren nach einem der Ansprüche 11 bis 13, das die Erzeugung des Steuersignals (dgt) in Abhängigkeit von einem Ausgangssignal der Differenzverstärkung (LNAdiff) umfasst, um den Pegel des Spannungssignals des zweiten Knotens (N2) am dritten Knoten (N3) auf einen Pegel zu verschieben, der auf dem Spannungspegel der lichtempfangenden Diode (PD) am ersten Knoten (N1) zentriert ist.

15. Verfahren nach Anspruch 14, wobei, um den Pegel des Signals von am dritten Knoten (N3) auf einen Pegel zu verschieben, der auf dem Spannungspegel der lichtempfangenden Diode (PD) zentriert ist, eine Kalibrierung einen ersten Schritt (AMBT_clb), der für erste Umgebungslichtbedingungen bestimmt ist, der ein Ermitteln eines ersten Wertes (X) des Steuersignals (dgt) umfasst, der es ermöglicht, den Pegel des Spannungssignals am dritten Knoten (N3) auf den gleichen Pegel wie die Spannung am ersten Knoten (N1) der lichtempfangenden Diode (PD) zu verschieben, und einen zweiten Schritt (SGNL_clb) umfasst, der für zweite Umgebungslichtbedingungen bestimmt ist, der ein Ermitteln eines zweiten Wertes (Y) des Steuersignals (dgt) umfasst, der es ermöglicht, den Pegel des Spannungssignals am dritten Knoten (N3) auf den gleichen Pegel wie die Spannung am ersten Knoten (N1) der lichtempfangenden Diode (PD) zu verschieben.

16. Verfahren nach Anspruch 15, wobei die Kalibrierung das Festlegen eines kalibrierten Werts des Steuersignals (dgt) gleich dem ersten Wert plus der Hälfte der Differenz zwischen dem ersten Wert und dem zweiten Wert (X+(Y-X)/2) umfasst.

17. Verfahren nach einem der Ansprüche 11 bis 16, das weiter eine Verarbeitung des aus der Differenzverstärkung (LNAdiff) hervorgehenden Signals, um ein Rechteck-Ausgangssignal (Sout) bereitzustellen, eine Erzeugung (OSC) einer Vielzahl von Phasen eines Taktsignals, das Taktzyklen aufweist, und eine Erkennung, in dem Ausgangssignal (Sout), eines Bitpaket-Startindikators (RE), eine Ermittlung einer der Phasen (ϕi), deren Taktzyklus am nächsten am Bitpaket-Startindikator (RE) beginnt, und eine Begrenzung, im Ausgangssignal (Sout), der Bits eines Bitpakets (A, B, Z) auf die Taktzyklen des Taktsignals mit der ermittelten Phase umfasst.

18. Verfahren zur Kommunikation über Lichtsignal (SYS), das ein Empfangsverfahren nach einem der Ansprüche 11 bis 17 und eine Sendung umfasst, die ein Erzeugen, durch eine lichtemittierende Diode, des Lichtsignals umfasst, das Bitpakete transportiert, wobei die aufeinanderfolgenden Bitpakete zeitlich um eine Dauer von mindestens gleich der Dauer eines Bitpakets getrennt sind.

19. Verfahren nach Anspruch 18 in Kombination mit Anspruch 15, wobei das Empfangsverfahren und die Sendung bei der Kalibrierung so zusammenwirken, dass die Sendung eine Erzeugung des Lichtsignals im ersten Schritt (AMBT_clb) umfasst, wobei die ersten Umgebungslichtbedingungen nur eine Umgebungshelligkeit umfassen, und so, dass die Sendung eine kontinuierliche Erzeugung des Lichtsignals im zweiten Schritt (SGNL_clb) umfasst, wobei die zweiten Umgebungslichtbedingungen die Umgebungshelligkeit und die Helligkeit des gesendeten Signals umfassen.

20. Verfahren nach einem der Ansprüche 18 oder 19, wobei das Empfangsverfahren und die Sendung jeweils eine Erzeugung von Taktsignalen umfassen, die jeweilige Taktzyklen aufweisen und auf die gleiche Frequenz geregelt sind, wobei die Sendung eine Begrenzung, auf die Taktzyklen des Taktsignals, der Erzeugung der Bits der gesendeten Bitpakete (A, B, Z) umfasst, wobei das Empfangsverfahren eine Begrenzung, auf die Taktzyklen des Taktsignals, der Erkennung der Bits der empfangenen Bitpakete (A, B, Z) umfasst.

## Claims

1. A light signal communication receiving device including a photoreceiving diode (PD) configured to generate a current signal on a first node (N1) from a received light signal, a preamplifier (TIA) configured to convert the current signal on the first node (N1) into a voltage signal on a second node (N2), **characterised in that** it comprises a differential amplifier (LNAdiff) including a first input connected to the first node (N1) and a second input connected to a third node (N3) coupled to the second node (N2) via an adjustment circuit (ADJ) configured to shift the level of the voltage signal from the second node (N2) to the third node (N3), in a manner controlled by a control signal (dgt).

2. The device according to claim 1, wherein the preamplifier includes a transistor (Mtia) having a control terminal coupled to the first node (N1) and a conduction terminal coupled to the second node (N2), a resistive element coupled between the first node (N1) and the second node (N2), and a current generator circuit (IgenTIA) configured to generate a bias current on the second node (N2) .

3. The device according to one of claims 1 or 2, wherein the adjustment circuit (ADJ) includes a resistive element (R23) coupled between the second node (N2) and the third node (N3) and a generator circuit current (IgenDAC) configured to generate an adjustment current on the third node (N3), at an intensity controlled by the control signal (dgt) .

4. The device according to one of the preceding claims, further including a control circuit (CMD) configured to generate the control signal (dgt) according to an output signal from the differential amplifier (LNAdiff) so as to shift the level of the voltage signal from the second node (N2) to the third node (N3) to a level centred on the voltage level of the photoreceptor diode (PD) to the first node (N1).

5. The device according to claim 4, wherein the control circuit (CMD), in order to shift the level of the signal from the third node (N3) to a level centred on the voltage level of the photoreceptor diode (PD), is configured to carry out a calibration comprising a first step (AMBT_clb), intended for first ambient light conditions, comprising an identification of a first value (X) of the control signal (dgt) allowing to shift the level of the voltage signal on the third node (N3) at the same level as the voltage on the first node (N1) of the photoreceptor diode (PD), and a second step (SGNL clb), intended for second ambient light conditions, comprising an identification of a second value (Y) of the control signal (dgt) allowing to shift the level of the voltage signal on the third node (N3) to the same level as the voltage on the first node (N1) of the photoreceptor diode (PD).

6. The device according to claim 5, wherein the calibration comprises the establishment of a calibrated value of the control signal (dgt) equal to the first value added with half the difference between the first value and the second value (X+(Y-X)/2).

7. The device according to one of the preceding claims, wherein the receiver device further includes an output stage (LNA_chn, SQRR) configured to provide a square output signal (Sout) from outputs of the differential amplifier (LNAdiff), an oscillator circuit (OSC) configured to generate a plurality of phases of a clock signal having clock cycles, and a signal recovery stage (CDR) configured to detect in the output signal a bit packet start indicator (RE), identify one of said phases (ϕi) whose clock cycle begins closest to the bit packet start indicator, and delimit, in the output signal (Sout), bits of a bit packet (A, B, Z) on the clock cycles of the clock signal at the identified phase.

8. A light signal communication system (SYS) including a receiver device according to one of claims 1 to 7, and an emitter device comprising a photo-emitting diode configured to generate the light signal conveying bit packets, the successive bit packets being separated in time by a duration at least equal to the duration of a bit packet.

9. The system according to claim 8 as combined with claim 5, wherein the receiver device and the emitter device collaborate in the calibration so that the emitter device does not generate the light signal in the first step (AMBT clb), the first ambient light conditions comprising ambient brightness only, and such that the emitting device generates the light signal continuously in the second step (SGNL clb), the second ambient light conditions comprising the ambient brightness and the brightness of the emitted signal.

10. The system according to one of claims 8 or 9, wherein the receiver device and the emitter device each include an independent oscillator circuit (OSC), configured to generate respective clock signals having clock cycles and set to the same frequency, the emitter device being configured to delimit, on the clock cycles of the clock signal, the generation of the bits of the emitted bit packets (A, B, Z), the receiver device being configured to delimit, on the clock cycles of the clock signal, the detection of the bits of a received bit packet (A, B, Z).

11. A process for receiving a communication by light signal comprising:
- a generation of a current signal on a first node (N1) from a received light signal, by a photoreceptor diode (PD),
- a preamplification (TIA) converting the current signal on the first node (N1) into a voltage signal on a second node (N2), **characterised in that** the process comprises:
- a shift (ADJ), on a third node (N3) of the level of the voltage signal of the second node (N2) in a manner controlled by a control signal (dgt),
- a differential amplification (LNAdiff) between the voltage present on the first node (N1) and the voltage present on the third node (N3).

12. The process according to claim 11, wherein the preamplification (TIA) comprises a flow of the current signal in a resistive element (R12) coupled between a control terminal of a transistor (Mtia) coupled to the first node and a conduction terminal of the transistor (Mtia) coupled to the second node (N2), and a generation of a bias current on the second node (N2).

13. The process according to one of claims 11 or 12, wherein the offset (ADJ) on the third node (N3) of the level of the voltage signal of the second node (N2) comprises a generation of an adjustment current, of intensity controlled by the control signal (dgt), in a resistive element (R23) coupled between the second node (N2) and the third node (N3).

14. The process according to one of claims 11 to 13, comprising the generation of the control signal (dgt) according to an output signal of the differential amplification (LNAdiff) so as to shift the level of the voltage signal of the second node (N2) on the third node (N3) at a level centred on the voltage level of the photoreceptor diode (PD) on the first node (N1).

15. The process according to claim 14, wherein, in order to shift the level of the signal from the third node (N3) to a level centred on the voltage level of the photoreceptor diode (PD), a calibration comprises a first step (AMBT_clb), intended for first ambient light conditions, comprising an identification of a first value (X) of the control signal (dgt) allowing to shift the level of the voltage signal on the third node (N3) to the same level as the voltage on the first node (N1) of the photoreceptor diode (PD), and a second step (SGNL clb), intended for second ambient light conditions, comprising an identification of a second value (Y) of the control signal (dgt) allowing to shift the level of the voltage signal on the third node (N3) to the same level as the voltage on the first node (N1) of the photoreceptor diode (PD) .

16. The process according to claim 15, wherein the calibration comprises establishing a calibrated value of the control signal (dgt) equal to the first value added with half the difference between the first value and the second value (X+(Y-X)/2).

17. The process according to one of claims 11 to 16, further comprising processing the signal from the differential amplification (LNAdiff) so as to provide a square output signal (Sout), a generation (OSC) of a plurality of phases of a clock signal having clock cycles, and detection in the output signal (Sout) of a bit packet start indicator (RE), an identification of one of said phases (ϕi) whose clock cycle begins closest to the bit packet start indicator (RE), and a delimitation, in the output signal (Sout), of the bits of a bit packet (A, B, Z) on the clock cycles of the clock signal at the identified phase.

18. A light signal communication method (SYS) including a reception process according to one of claims 11 to 17, and an emission comprising a generation, by a photoemitting diode, of the light signal conveying bit packets, the successive bit packets being separated in time by a duration at least equal to the duration of a bit packet.

19. The method according to claim 18 as combined with claim 15, wherein the reception process and the emission collaborate in the calibration so that the emission comprises a generation of the light signal in the first step (AMBT clb), the first ambient light conditions comprising ambient brightness only, and such that the emission comprises a generation of the light signal continuously in the second step (SGNL clb), the second ambient light conditions comprising the ambient brightness and the brightness of the emitted signal.

20. The method according to one of claims 18 or 19, wherein the reception process and the emission each comprise a generation of clock signals having respective clock cycles and which are set at the same frequency, the emission comprising a delimitation, on the clock cycles of the clock signal, of the generation of the bits of the emitted bit packets (A, B, Z), the reception method comprising a delimitation, on the clock cycles of the clock signal, of the detection of the bits of the received bit packets (A, B, Z).
